# EUROPEAN PATENT SPECIFICATION

(11) **EP 2 725 255 B1**
(45) Date of publication and mention of the grant of the patent: **29.03.2017**
(21) Application number: 13173038.4
(22) Date of filing: 20.06.2013
(51) Int. Cl.: F16D 65/00, F16D 65/092

(54) **APPARATUS FOR REDUCING DUST EMISSIONS**
VORRICHTUNG ZUR VERMINDERUNG DER STAUBEMISSION
APPAREIL A REDUIRE L'EMISSION DE POUSSIERES

(30) Priority: 26.10.2012 PL 40137412
(43) Date of publication of application: 30.04.2014
(73) Proprietor: Przemyslowy Instytut Motoryzacji, 03-301 Warszawa (PL)
(72) Inventor: Jakubowski, Andrzej, 03-147 Warszawa (PL); Pijanowski, Boguslaw, 03-982 Warszawa (PL); Kieracinska, Anna, 90-244 ód (PL)
(74) Representative: Sielewiesiuk, Jakub

(56) References cited:
- DE-A1- 4 401 846
- DE-A1- 19 643 869
- JP-U- H0 338 432
- JP-U- S5 593 739
- PL-A1- 386 829

## Description

The object of the invention is the apparatus for reducing dust emissions generated during braking of a vehicle equipped with a disc brake and a brake system comprising such an apparatus. In particular, such an apparatus includes the brake friction pad having a friction material layer mounted on a backplate, intended for mounting to the brake calliper of the said disc brake from the side of this brake's disc and at least one suction nozzle intended for connecting via the compressed air hose to a vacuum source.

The average car emits into the environment large amounts of brake dust with abrased brake linings, generated as a result of friction between the brake pads (friction pads) and the brake disc during braking.

From the point of view of the environment protection, it is a problem because of this reason, busy intersections, roads and streets of big cities are places where the formation of tons of dust per year takes place, and many users living there are exposed to the harmful effects of such dust.

Various methods and apparatuses reducing the emission of dust into the environment from automotive vehicles braking systems are knows in the state of the art in the automotive field, including friction braking systems, i.e., those using the disc or drum brake friction linings to slow down and stop a road vehicle.

The publication DE 4401846 A1 discloses the structure of the friction lining including milled recesses within the friction lining, for example in the form of a ring, connected to a source of compressed air through at least one compressed air hose. Suction nozzles are independent components, located outside the brake calliper. This solution only applies to disc brakes.

The publication DE 4240873 A1 discloses the apparatus for collecting brake dust in the motor vehicles equipped with disc brakes, having a suction filter, centrally mounted with flexible connections, with a suction nozzle associated with individual brake pads. Suction nozzle (6, 7) is installed in the proximity of brake pads (3, 4) and is connected through a rubber tube from the central filtration unit (14).

Additionally, patent application EP 1256739 A2 discloses a method of electrostatic precipitation of the vehicle braking system and the vehicle braking system which includes a removable collector collecting brake dust near the friction lining (24, 26) and an apparatus for generating an electric field, so that generated brake dust is drawn into the collector.

The publication DE 19643869 A1 discloses a braking system for a motor vehicle or machine which has a suction device (2, 5) for removing dust generated from the abrasion of the friction linings. This suction device has at least one funnel dust collector (5), which at one end has a suction opening adjacent to the brake disc (7) or to the brake drum. The other end is connected through the suction hose (4) to the collector (3), which has an electrically powered pump to produce a vacuum.

Polish patent application no. P-381 004 discloses a method of removing and collecting dust generated during braking, at the interface between the friction lining and brake disc, with the air stream generated by its compression or causing a vacuum in a closed space, in which the brake disc in located, and then directing the contaminated air into a special container with a filter.

Polish patent application no. P-386829 discloses an apparatus for reducing the emission of dust from the disc brake assembly, consisting of two callipers (1, 2), in which two suction openings were made (4, 5), on both sides of the brake disc (3) so that while braking, the rotating brake disc first is in contact with the friction pads (6, 7) and then moves past the suction openings (4, 5) connected by metal wires (8, 9) with a the tee (10) which is connected via plastic hose (11) with a filter (12) and the filter (12) is connected via plastic hose (13) to the manifold of the car engine (14).

It is known JP S55 93 739 U, which relates to a method of supplying with compressed air or vacuum to collect dust and to cool the compressed air brake pad. The solution described herein includes a friction brake pad, in which are directly formed channels connected to each other to the air supply and having an inlet and an outlet in the brake friction pads. The disadvantage of this solution is to weaken the cohesion through channels formed in brake friction material and failure to comply with the requirement of shear strength and compressibility of the UNECE 90.

Also known JP H03 38432U, which relates to a method of collecting a dust from the brake that uses the working principle of vacuum cleaner, where the fan draws air from the space of the friction surfaces containing formed channels to the air supplying and collecting dust, which is also enclosed a special cover. The disadvantage of this solution is to weaken the cohesion of the friction material through channels formed, as required due to the shear strength and compressibility of the UNECE 90.

All of the above-mentioned solutions essentially consist in capturing generated dust, but their performance is not satisfactory or they require the use of additional technical measures, such as the source of an electrostatic field.

Unexpectedly, during the approval tests of the brake pads there appeared the idea of a solution, which aimed to reduce the emissions of dust by the brake pads into the environment during automotive vehicle braking.

Therefore, the object of the present invention is to provide an improved apparatus, effectively reducing dust emissions in vehicle disc brakes, especially road ones, marked by a high efficiency of dust capturing and not requiring the use of additional technical measures, such as the source of an electrostatic field. In particular, this invention provides reducing, to a large extend, pollution from the disc brake and has a very high efficiency of collecting almost all the amount of dust generated during braking, because the suction nozzle effectively protects the collected dust from air swirls during the motion of the vehicle. The collected dust can then be recycled.

Thus, in accordance with the present invention an apparatus for reducing emissions of dust generated during braking of a vehicle equipped with a disc is defined by the features of claim 1.

Preferably, the suction opening of the suction nozzle connects through the backplate opening with the quick-disconnect coupling designed for the connection of the suction nozzle with the compressed air hose.

Preferably, the backplate is made of metal, preferably of steel.

Yet more preferably, the edge is of the same height as the friction material layer, so that the edge fits closely to the working surface of the disc during braking.

The present invention further includes a vehicle braking system equipped with a disc brake, in particular an automotive vehicle, characterized in that it comprises an apparatus of the invention defined above.

The system of the invention further comprises compressed air hoses for connecting the suction nozzle, in particular through the quick-disconnect coupling with a vacuum source, preferably with the vehicle manifold.

Preferably, the additional air filter is located in a chain of compressed air hoses between the suction nozzle and the vacuum source.

Preferably, a part of the compressed air hose directly connected with the suction nozzle is made of metal.

Preferably, a part of the compressed air hose directly connected with the vacuum source is flexible, preferably made of plastic.

The system of the invention preferably includes two suction nozzles settled in two callipers of the vehicle disc brake, positioned on the opposite sides of the brake disc, preferably symmetrically with respect to the disc.

More preferably, parts of the compressed air hoses leading from the suction nozzles to the vacuum source, respectively, are connected, preferably by a tee, while one common compressed air hose leads from their connection to the vacuum source, which preferably contains an additional air filter.

The present invention has the following advantages, which include:
- collection of almost 100% of brake dust produced, since all the dust is drawn into the suction nozzle area;
- suction nozzle sticking closely to the disc during braking, not creating a gap between the suction nozzle and the disc, as in previous solutions;
- and the fact that, on the free place of the sheet, on which there is no friction material a silicone can be added, which is building up the edge and thus seals the suction nozzles (an apparatus according to the invention may be constructed without the edges, but then it is less effective in collecting dust); if such a seal (edge) is applicable then high-temperature silicone is used for its formation, the one which is resistant to high temperature, does not alter its state into liquid and does not melt at high temperatures, which is not combustible, becomes flexible and sealed at high temperatures, preferably, for example, a silicone by Pacer Technology company LLC, no. 80 726 is used.

### Preferred embodiment of the invention

The invention will now be further described in the preferred embodiment, with reference to the accompanying drawings, in which:
- fig. 1: shows a general scheme and a view of A-A section of the disc brake according to the invention, wherein the following symbols were used: 1 and 2 - brake callipers; 3 - disc and its rotation direction (marked with an arrow); 4 and 5 - suction nozzles; 6 and 7 - fraction pads; 8, 9 - metal wires; 10 - tee; 11 and 13 - plastic hoses; 12 - additional air filter; and 14 - engine manifold or other vacuum source;
- fig. 2: shows an example embodiment of the invention including the suction nozzle made in the disc brake friction pad (brake pad);
- fig. 3: a diagram of the suction nozzle made in the disc brake friction pad and a view of A-A section, wherein the following symbols were used: 4a - quick-disconnect coupling, 4b - backplate (steel), 4c - edge (silicone), 4d - pad friction material.

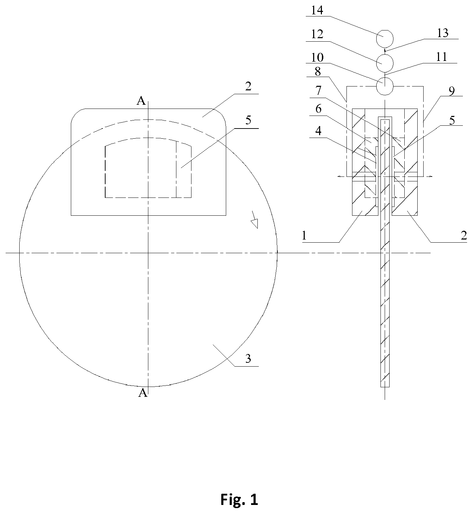

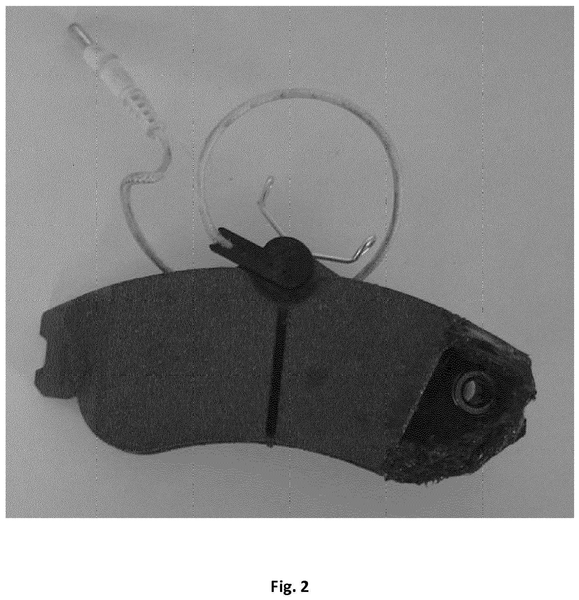

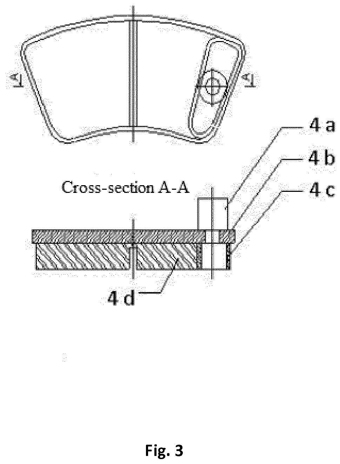

A preferred embodiment of the invention is shown in fig. 1-3.

The braking system of the invention comprises the brake callipers 1 and 2, comprising the suction nozzles 4 and 5 made in the friction pads of the callipers 1 and 2 in the direction of rotation of disc 3 and the metal wires 8 and 9, with a tee 10, connected through the hose made of plastic 11 and 13 with an additional air filter 12, a filter 12 which in turn is connected to a removable engine manifold 14 as a vacuum source.

The apparatus of the invention for reducing duct includes two suction nozzles 4 and 5 for collecting brake dust made directly in the disc brake friction pad 6 and 7 (brake pad). Friction pad 6 and 7 includes the friction material layer 4d, while the suction opening of the suction nozzle 4 and 5 is located in the steel backplate 4b, and in the presented embodiment it is placed at the "end" of the friction pad (looking in the direction of rotation of disc 3).

The suction nozzle 4 includes the suction opening, made in the steel backplate 4b, located at the edge of the friction layer 4d and is connected with the compressed air hose 8, 9, 11 and 13, including the metal wire 8 and 9, and the plastic hose 11 and 13, by means of the quick-disconnect coupling 4d, for collecting the suction nozzle 4 and 5 with the compressed air hose 8, 9, 11 and 13.

The quick-disconnect coupling 4a is connected with the additional air filter 12 by means of the metal wire 8 and 9 and through the tee 10. In turn, the air filter 12 is connected trough the plastic hose 11 and 13 with a removable engine manifold 14 as a vacuum source, collecting brake dust.

The suction opening of the suction nozzle 4, 5 is located near the edge of the friction material layer 4d of the friction lining of the brake callipers 1 and 2 which the rotating disc of the disc brake passes later in use.

The suction nozzle 4 includes the suction opening, made in the backplate (steel) 4b of the pad 4 and connected through the opening in the backplate 4b with the compressed air hose 8, 9, 11 and 13 by means of the quick-disconnect coupling 4a. The suction opening is further provided with the edge 4c, made of high-temperature silicone by Pacer Technology company LLC, no. 80726. The edge 4c of the suction nozzle 4 fits closely to the working surface of the disc during braking, and there is no gap between the brake disc 3 and the suction nozzle 4. The height of the edge 4c of the suction nozzle 4 decreases with the height of the friction material 4d (due to abrasion). Thus, the effect of adhesion to the disc 3 is durable.

The apparatus of the present invention can be widely used in vehicles, in particular automotive vehicles, which can contribute to the maintenance of appropriate standards of air dust in the light of the current EU legislation.

## Claims

1. An apparatus for reducing dust emissions generated during braking of a vehicle equipped with a disc brake, in particular automotive vehicle, the apparatus comprising:
a directional brake friction pad (6, 7) having a friction material layer (4d) mounted on a backplate (4b), intended for mounting in the brake calliper (1, 2) of said disc brake,
at least one suction nozzle (4, 5) intended for connecting via the compressed air hose (8, 9, 11, 13) to a vacuum source (14),
**characterised in that**
the suction opening of the suction nozzle (4) is located in the back plate (4b), the nozzle (4) connecting the friction surface of the friction material to the suction opening and being located at the outlet-side radial edge of the friction material layer (4d) of the brake friction pad (6), the suction opening of the suction nozzle (4) having the edge (4c) being made of flexible material resistant to high temperature, preferably a plastic, resistant to high temperature, most preferably high-temperature silicone.

2. The apparatus of claim 1, **characterized in that** the suction opening of the suction nozzle (4) connects through the backplate opening (4b) with the quick-disconnect coupling (4a) designed for the connection of the suction nozzle (4) with the compressed air hose (8, 9, 11, 13).

3. The apparatus of claim 1 or claim 2, **characterized in that** the backplate (4b) is made of metal, preferably of steel.

4. The apparatus of claim1, **characterized in that** the edge (4c) is of the same height as the friction material layer (4d), so that the edge (4c) fits closely to the working surface of the disc (3) during braking.

5. A vehicle braking system equipped with the disc brake, in particular an automotive vehicle, **characterised in that** it comprises an apparatus of any of the preceding claims.

6. The system of claim5, **characterised in that** it further comprises compressed air hoses (8, 9, 11, 13) for connecting the suction nozzle (4), in particular through a quick-disconnect coupling (4a) with a vacuum source (14), preferably with the vehicle manifold.

7. The system of claim 5 or 6, **characterised in that** the additional air filter (12) is located in a chain of compressed air hoses (8, 9, 11, 13) between the suction nozzle (4) and the vacuum source (14).

8. The system of claim5, 6 or 7, **characterised in that** a part of the compressed air hose (8) directly connected with the suction nozzle (4) is made of metal.

9. The system of claim5, 6, 7 or 8, **characterised in that** a part of the compressed air hose (13) directly connected with the vacuum source (14) is flexible, preferably made of plastic.

10. The system of any of the preceding claims from 5 to 9, **characterised in that** it includes two suction nozzles (4, 5) settled in two callipers (1, 2) of the vehicle disc brake, positioned on the opposite sides of the brake disc (3), preferably symmetrically with respect to the disc (3).

11. The system of claim 10, **characterised in that** parts of the compressed air hoses (8, 9) leading from the suction nozzles (4, 5) to the vacuum source (14), respectively, are connected, preferably by a tee (10), while one common compressed air hose (11, 13) leads from their connection to the vacuum source (14), which preferably contains an additional air filter (12).

## Patentansprüche

1. Apparat zur Verminderung von beim Bremsen eines mit Scheibenbremsen ausgestattetem Fahrzeugs, und insbesondere eines Kraftfahrzeugs entstehender Staubemission, wobei der Apparat:
eine richtungsorientierte Bremsreibauflage (6, 7) mit einer Reibmatterialschicht (4d) auf einer Rückenplatte (4b), bestimmt zur Montage in einer Bremssattel (1, 2) der genannten Bremsscheibe,
mindestens eine Saugdüse (4, 5) bestimmt zur Verbindung mittels eines Druckluftschlauchs (8, 9, 11, 13) mit einer Vakuumquelle (14) aufweist, **gekennzeichnet dadurch, dass**
die Saugöffnung der Saugdüse (4) in der Rückenplatte (4b) angeordnet ist, die Saugdüse (4) die Reibfläche des Reibstoffs mit der Saugöffnung verbindet und ausgangsseitig an der Radialkante der Reibmatterialschicht (4d) der Bremsreibauflage (6) angeordnet ist, wobei die Saugöffnung der Saugdüse (4) mit einen Rand (4c) aus flexiblem und gegen hohe Temperaturen beständigem Werkstoff, vorzugsweise aus einem Kunststoff hergestellt ist, der gegen hohe Temperaturen beständig ist und am meisten bevorzugt aus Hochtemperatursilikon.

2. Apparat nach Anspruch 1, **gekennzeichnet dadurch, dass** die Saugöffnung der Saugdüse (4) durch die Öffnung (4b) in der Rückenplatte mit einem Schnellentkupplungsteil (4a) verbunden ist, entworfen zur Verbindung der Saugdüse (4) mit dem Druckluftschlauch (8, 9, 11, 13).

3. Apparat nach Anspruch 1 oder 2, **gekennzeichnet dadurch, dass** die Rückenplatte (4b) aus Metall, vorzugsweise aus Stahl gefertigt ist.

4. Apparat nach Anspruch 1, **gekennzeichnet dadurch, dass** der Rand (4c) dieselbe Höhe wie die Reibmatterialschicht (4d) aufweist, so dass der Rand (4c) nahe der Arbeitsfläche der Scheibe (3) beim Bremsen anliegt.

5. Fahrzeugbremssystem ausgestattet mit einer Bremse, insbesondere eines Kraftfahrzeugs, **gekennzeichnet dadurch, dass** es einen Apparat nach einem der vorigen Ansprüche aufweist.

6. System nach Anspruch 5, **gekennzeichnet dadurch, dass** es darüber hinaus Druckluftschläuche (8, 9, 11, 13) zur Verbindung der Saugdüse (4), insbesondere durch ein Schnellentkupplungsteil (4a) mit einer Vakuumquelle (14), vorzugsweise mit dem Krümmer des Fahrzeugs, aufweist.

7. System nach Anspruch 5 oder 6, **gekennzeichnet dadurch, dass** ein zusätzlicher Luftfilter (12) in einer Reihe der Druckluftschläuche (8, 9, 11, 13) zwischen der Saugdüse (4) und der Vakuumquelle (14) vorgesehen ist.

8. System nach Anspruch 5, 6 oder 7 **gekennzeichnet dadurch, dass** ein direkt mit der Saugdüse (4) verbundener Teil des Druckluftschlauch (8) aus Metall hergestellt ist.

9. System nach Anspruch 5, 6, 7 oder 8, **gekennzeichnet dadurch, dass** ein direkt mit der der Vakuumquelle (14) verbundener Teil des Druckluftschlauch (13) flexibel, vorzugsweise aus Kunststoff hergestellt ist.

10. System nach einem der vorigen Ansprüche von 5 bis 9, **gekennzeichnet dadurch, dass** es zwei in zwei an gegenüberliegenden Seiten der Scheibenbremse (3) befindlichen Bremsbacken (1, 2) der Scheibenbremse angeordnete Saugdüsen (4, 5) aufweist, vorzugsweise symmetrisch gegenüber der Scheibe (3).

11. System nach Anspruch 10, **gekennzeichnet dadurch, dass** die Teile von Druckluftschläuchen (8, 9), die von die Saugdüsen (4, 5) zur Vakuumquelle (14) führen, , bzw., , vorzugsweise mittels eines T-Stücks (10) verbunden sind, während ein gemeinsamer Druckluftschlauch (11, 13) von deren Verbindung zur Vakuumquelle (14) führt, die vorzugsweise einen zusätzlichen Luftfilter (12) aufweist.

## Revendications

1. Un appareil pour réduire les émissions de poussières générées lors du freinage d'un véhicule équipé du frein à disque, en particulier véhicule automobile, l'appareil comprenant :
un patin de friction de frein directionnel (6, 7) ayant une couche de matériau de friction (4d) montée sur une plaque arrière (4b), destiné à être monté dans l'étrier de frein (1, 2) dudit frein à disque,
au moins une buse d'aspiration (4, 5) destinée à être reliée par l'intermédiaire du tuyau d'air comprimé (8, 9, 11, 13) à une source de vide (14), **caractérisé en ce que**
l'ouverture d'aspiration de la buse d'aspiration (4) est située dans la plaque arrière (4b), la buse (4) reliant la surface de frottement du matériau de friction à l'ouverture d'aspiration et étant située au bord radial du côté sortie de la couche de matériau de frottement (4d) du patin de friction de frein (6), l'ouverture d'aspiration de la buse d'aspiration (4) ayant le bord (4c) fait d'un matériau flexible résistant à haute température, de préférence d'une matière plastique, résistant à haute température, plus préférablement, d'un silicone haute température.

2. L'appareil selon la revendication 1, **caractérisé en ce que** l'ouverture d'aspiration de la buse d'aspiration (4) se raccorde à travers l'ouverture de la plaque arrière (4b) à l'accouplement à déconnexion rapide (4a) destiné pour le raccordement de la buse d'aspiration (4) au tuyau d'air comprimé (8, 9, 11, 13).

3. L'appareil selon la revendication 1 ou la revendication 2, **caractérisé en ce que** la plaque arrière (4b) est réalisée en métal, de préférence en acier.

4. L'appareil selon la revendication 1, **caractérisé en ce que** le bord (4c) est de la même hauteur que la couche de matériau de friction (4d) de telle sorte que le bord (4c) ajuste étroitement à la surface de travail du disque (3) pendant le freinage.

5. Un système de freinage de véhicule équipé d'un frein à disque, en particulier un véhicule automobile, **caractérisé en ce qu'**il comprend un appareil selon l'une quelconque des revendications précédentes.

6. Le système selon la revendication 5, **caractérisé en ce qu'**il comprend en outre des tuyaux d'air comprimé (8, 9, 11, 13) pour raccorder la buse d'aspiration (4), en particulier par un accouplement à déconnexion rapide (4a) à une source de vide (14), de préférence au collecteur de véhicule.

7. Le système selon la revendication 5 ou 6, **caractérisé en ce que** le filtre à air supplémentaire (12) est situé dans une chaîne de tuyaux d'air comprimé (8, 9, 11, 13) entre la buse d'aspiration (4) et la source de vide (14).

8. Le système selon la revendication 5, 6, ou 7, **caractérisé en ce qu'**une partie du tuyau d'air comprimé (8) directement reliée à la buse d'aspiration (4) est en métal.

9. Le système selon la revendication 5, 6, 7 ou 8, **caractérisé en ce qu'**une partie du tuyau d'air comprimé (13) directement reliée à la source de vide (14) est flexible, de préférence en plastique.

10. Le système selon l'une quelconque des revendications précédentes de 5 à 9, **caractérisé en ce qu'**il comprend deux buses d'aspiration (4, 5) installées dans deux étriers (1, 2) du frein à disque de véhicule, positionnées sur les côtés opposés du disque de frein (3), de préférence symétriquement par rapport au disque (3).

11. Le système selon la revendication 10, **caractérisé en ce que** les parties des tuyaux d'air comprimé (8, 9) s'étendant à partir des buses d'aspiration (4, 5) à la source de vide (14), respectivement, sont reliées, de préférence par un té (10), tandis qu'un tuyau d'air comprimé commun (11, 13) s'étend à partir de leur raccordement à la source de vide (14) qui contient de préférence un filtre à air supplémentaire (12).
